# NEW EUROPEAN PATENT SPECIFICATION

(11) **EP 1 675 747 B2**
(45) Date of publication and mention of the opposition decision: **29.03.2017**
(45) Mention of the grant of the patent: 18.12.2013
(21) Application number: 04791797.6
(22) Date of filing: 15.10.2004
(51) Int. Cl.: B60N 2/56

(54) **AUTOMOTIVE VEHICLE SEAT INSERT**
KRAFTFAHRZEUGSITZEINSATZ
GARNITURE INTERNE POUR SIEGE DE VEHICULE AUTOMOBILE

(30) Priority: 17.10.2003 US 512237 P; 17.10.2003 US 512230 P; 15.10.2004 US 966652; 15.10.2004 US 966653
(43) Date of publication of application: 05.07.2006
(73) Proprietor: W.E.T. AUTOMOTIVE SYSTEMS AG, 85235 Odelzhausen (DE)
(72) Inventor: BAJIC, Goran, Windsor, Ontario N8Y 4A2 (CA); BRENNAN, Lindy, Windsor, Ontario N9Y 3X8 (CA); TRUANT, Scott, 75 Riverside Drive E., Windsor, Ontario N9A 7C4 (CA); ONICA, Madalina, Windsor, Ontario N9G 2R6 (CA)
(74) Representative: Bawden, Peter Charles
(86) International application number: PCT/IB2004/003931
(87) International publication number: WO 2005/037601

(56) References cited:
- EP-A- 1 123 834
- EP-B- 1 349 746
- WO-A2-02/053411
- DE-A1- 10 255 638
- DE-C1- 19 851 209
- DE-T2- 60 112 473
- FR-A- 2 630 056
- US-A1- 2003 102 699

## Description

### CLAIM OF PRIORITY

The present application claims the benefit of U.S. provisional applications Nos. 60/512,237 and 60/512,230, both filed on October 17, 2003, and U.S. Application Nos. 10/__,__ (Attorney No. 1139-015) and 10/__,__ (Attorney No. 113-019), both filed on October 15, 2004.

### FIELD OF THE INVENTION

The present invention relates to a sealed insert for providing heating, ventilation or a combination thereof to a seat of an automotive vehicle.

### BACKGROUND OF THE INVENTION

For many years the transportation industry has been concerned with designing seats for automotive vehicles that provide added comfort to occupants in the seats. Various innovations in providing seating comfort are discussed in U.S. Patent Nos. 6,064,037 ; 5,921,314 ; 5,403,065 ; 6,048,024 and 6,003,950 . In addition, other innovations in providing seating comfort are discussed in U.S. Patent Application serial no. 09/619,171, filed July 19, 2000 , titled "Ventilated Seat Having a Pad Assembly and a Distribution Device"; U.S. Patent Application serial no. 09/755,505, filed January 5, 2001 , titled "Ventilated Seat"; and U.S. Patent Application serial no. 09/755,506, filed January 5, 2001 , titled "Portable Ventilated Seat", FR 26 30056 shows also a ventilated seat for an interior of a vehicle. In the interest of continuing such innovation, the present invention provides an improved sealed insert for an automotive vehicle seat for assisting in providing comfort control to an occupant in the seat. DE19851209C1 describes a backrest for vehicle seats in which a blower is retained in the cushion.

### SUMMARY OF THE INVENTION

According to the present invention, there is disclosed an automotive vehicle seat having the features of claim 1. The seat typically provides an open space beneath an air-permeable trim surface of the seat. Preferably, the open space is located between the trim surface and a cushion of the seat. An air mover is typically in fluid communication with the open space for moving air through the open space, the air permeable trim surface or both.

The air mover is fastened to a pair of lumbar rods at a lumbar adjustment assembly. Advantageously, such components of the seat may be a standard part of a particular seat or may be easily adaptable for supporting the air mover such that minimal costs are added to the seat.

A tubular structure assists in providing fluid communication between the air mover and the open space. Advantageously, such a tubular structure can assist in allowing the air mover to be more conveniently located relative to various seating components. Also the invention includes a sealed insert for providing heating and ventilation to an automotive vehicle seat. The insert includes a middle layer sandwiched and between a forward layer and a rearward layer and sealed about a peripheral edge. The forward layer, the rearward layer or both preferably include a first opening and a plurality of second openings. Moreover, the middle layer preferably defines an open space in fluid communication with the first opening, the plurality of second openings or both.

According to one embodiment, the vehicle seat includes a seat cushion component and a seat backrest component, at least one of which is ventilated. Each ventilated component includes an air-permeable trim surface at the occupant contact areas of the seat and a cushion. The insert is located beneath the trim surface of each ventilated component and the insert includes an extension with the first opening defined therein. The extension extends through a forward and a rearward surface of the cushion of the ventilated component and an air mover is attached to the extension of the insert in fluid communication with the open space of the insert. In one highly preferred embodiment, the insert includes a body portion from which the extension extends and the extension is contoured as it extends away from the body portion. The air mover is fastened to lumbar guide wires of the automotive vehicle seat.

### BRIEF DESCRIPTION OF THE DRAWINGS

The features and inventive aspects of the present invention will become more apparent upon reading the following detailed description, claims and drawings, of which the following is a brief description:
Fig. 1A is a side sectional view of a portion of an exemplary seat according to the present invention;
Fig. 1B is an exploded perspective view of various layers and sub-layers of an exemplary comfort system according to an aspect of the present invention;
Fig. 1C is a blown up perspective view of a seat insert in accordance with an exemplary aspect of the present invention;
Fig. 2 is a flow diagram for producing seat inserts;
Fig. 3 is a partially cut-away elevational view of the seat insert of Fig. 1C after assembly of the insert;
Fig. 4 is a sectional view of the insert of Figs. 1C and 3 taken along line 4-4 in Fig. 3;
Fig. 5 is a perspective view of an exemplary fan suitable for application in the insert of the present invention; and
Fig. 6 is a sectional view of the insert attached in an exemplary manner to a seat of an automotive vehicle according to the present invention.
Fig. 7 is a front perspective view of an exemplary insert being assembled to an exemplary backrest component of a vehicle seat.
Fig. 8A is a rear cut away perspective view of the exemplary backrest component of Fig. 7 with the exemplary insert assembled thereto.
Fig. 8B is a perspective view of an exemplary fastener, which is employed for attaching an air mover assembly to a seat.
Fig. 9 is a top perspective view of another exemplary insert being assembled to an exemplary partially cut away seat component of a vehicle seat.
Fig. 10 is a top perspective view of the exemplary insert of Fig. 9 assembled to the exemplary seat component.
Fig. 11A is a bottom perspective view of the exemplary seat component of Fig. 9 during assembly.
Fig. 11B is another bottom perspective view of the exemplary seat component of Fig. 9 after assembly.
Fig. 12 is a rear perspective view of an exemplary fan assembly according to the present invention.
Fig. 13 is a front perspective view of the exemplary fan assembly of Fig. 12.

### DETAILED DESCRIPTION OF THE INVENTION

The present invention is predicated upon providing an automotive vehicle seat configured for providing heating, cooling, ventilation or a combination thereof to an occupant in the seat. The seat typically includes an open space beneath an air-permeable trim surface of the seat. Preferably, the open space is located between the trim surface and a cushion of the seat. An air mover is in fluid communication with the open space for moving air through the open space, the air permeable trim surface or both. The air mover is conveniently fastened to one or more components of the lumbar adjustment assembly (e.g., lumbar rods or wires) of the seat or a frame of the seat. Advantageously, such components of the seat may be a standard part of a particular seat or may be easily adaptable for supporting the air mover such that minimal costs are added to the seat. A tubular structure assists in providing fluid communication between the air mover and the open space. Advantageously, such a tubular structure can assist in allowing the air mover to be more conveniently located relative to various seating components. In other additional or alternative embodiments, the seat may include a barrier layer disposed between the trim layer of the seat and the open space.

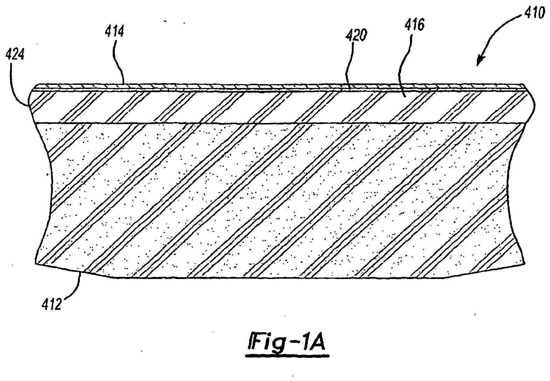

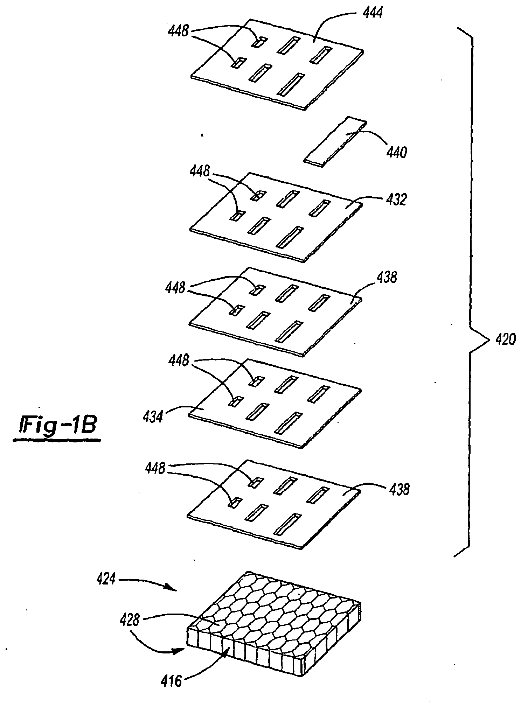

Referring to Figs. 1A and 1B, there are illustrated portions of a seat component 410, which could be a backrest cushion component or a seat cushion component according to the present invention. The seat component 410 typically includes a seat cushion 412, a trim layer 414 and an open space 416 therebetween. In the embodiment depicted, the seat component 410 also advantageously includes a forward layer 420, which may include a barrier sub-layer, a heater sub-layer or both. In another embodiment, the layer 420 may be located between open space 416 and the seat cushion 412. As used herein, seat cushion is used to refer to both the cushion upon which the occupant sits and to the cushion against the occupant may lean, i.e. the backrest cushion.

The trim layer 414 may be formed of any materials suitable for automotive vehicle seats such as cloth, perforated and non-perforated leather, combinations thereof or other like materials. In a preferred embodiment, the trim layer 414 is formed of a perforated leather having openings (e.g., through-holes) suitable for having fluid (e.g., ambient air, heated air, cooled air or a combination thereof) flow therethrough. In one embodiment, the leather is tanned or otherwise treated in a manner to maintain a relatively high moisture content, reduce its thermal insulation value effectively allowing it to alter its intrinsic specific heat so that the leather maintains less thermal energy. Also, such leather may permit the number of openings in the perforated leather may be reduced or eliminated.

The cushion 412 may also be formed of any material suitable for automotive vehicle seats. Exemplary materials includes foams (e.g., polymer/isocyanate foams) or other cushion materials. The cushion or cushion material include an air-impermeable barrier between the cushion and the open space. The air-impermeable barrier typically covers at least the portion of the cushion that is used by an occupant, although the barrier may be located on other portions of the cushion including on any through passages or sub-passages in the cushion. The barrier may additionally or alternatively include a coating material applied to the material of the cushion, a separate lining material that may be attached to the cushion or a space layer a chemically treated a surface of the cushion (e.g. a skin), or any combination thereof.

The open space 416 may be provided in a variety of ways, but is typically provided by positioning a spacer layer 424 between the seat cushion 412 and the trim layer 414. The spacer layer 424 is typically formed of a spacer material and the spacer material may be selected from a variety of different materials. The spacer material may be provided as a variety of synthetic materials such as plastic or polymeric materials, padding and stuffing materials, lining and carrier materials, combinations thereof or the like. Preferably, the spacer material is at least partially pliable or flexible. As examples, the spacer layer may be provided as a plurality of rubber, foam, plastic or other members or fibers. The members or fibers are preferably spaced apart from each other to define the open space 416 therebetween while still being close enough together to provide cushion and support. As another example the spacer layer may be formed of a 3-dimensional spacer fabric structure or material.

The particular spacer layer 424 shown is formed of polymeric (e.g., polyester) strand material that is interwoven to provide opposing honeycomb structures 428 (e.g., fabric panels), which are interconnected by several additional polymeric strand materials to provide the open space 416 between the structures 428 while still providing cushion and support. As an example, one preferred material is sold under the tradename 3MESH^{®} and is commercially available from Müller Textil GmbH, Germany or Müller Textiles, Inc., Rhode Island, USA.

As discussed, the forward layer 420, when included, can have a barrier sub-layer, a heater or heater sub-layer or both. In the embodiment depicted, the forward layer 420 includes a heater sub-layer 432, which is preferably laminated to a gas barrier sub-layer 434 (e.g., a film, a textile or otherwise) although neither are necessarily required. Various different types of heaters are suitable for incorporation into a car seat and it is contemplated that any of such heaters may be incorporated into the seat of the present invention. Such heaters typically incorporate flexible electrical heating elements that are preferably thin, flat, non-obtrusive or a combination thereof. As examples, a lay-wire heater, a carbon fiber heater, a positive thermal coefficient (PTC) heater, a thermoelectric heater or the like, which are typically supported with a backing (e.g., a cloth or fabric type backing) may be used. In a preferred embodiment, the heater sub-layer is a carbon fiber type heater with a backing (e.g., a non-woven layer). One exemplary preferred heater is sold under the tradename CARBOTEX® and commercially available from W.E.T Automotive Systems, Inc. in Germany and/or FTG Fraser-Technik GmbH, Schleizer Strasse 56-58, D-95028 Hot/Saale, Germany. An example of such a heater is disclosed in U.S. Patent 6,064,037, issued May 16, 2000.

When included, the barrier sub-layer 434 is typically formed of a plastic or polymeric material that softens or melts upon exposure to heat to assist the sub-layer 434 in adhering to one or more other layers or sub-layers. Alternatively, the barrier sub-layer 434 may be formed of fabrics, woven materials (e.g, goretex or microfibers), nylon, foam, including closed pore foam or other materials. Preferably, the barrier sub-layer 434 is substantially impermeable to fluids and particularly air such that the sub-layer 434 can assist in forming an air barrier as will be described further herein. Dimensionally, for a film barrier sub-layer, it is preferable for the film thickness to be about 0.1 mm to about 2.0 mm thick and more preferably about 0.7 mm to about 1.0 mm thick. Of course, it is contemplated that the film sub-layer 428 may have a variable thickness and may be outside of the aforementioned ranges.

As mentioned above, gas barrier sub-layer 434 also may be located between the open space and the cushion. In this aspect, the barrier sub-layer preferably provides a barrier adapted to prevent fluid flow through or into the cushion. In another embodiment, multiple similar or different sub-layers are utilized.

The forward layer 420 can also include one or more buffer sub-layers, one or more adhesives or adhesive sub-layers, one or more tape sub-layers, one or more porous foam layers or a combination thereof. Adhesive may be supplied in layers, drops or in a variety of other configurations. Preferably, the buffer layer is at least partially formed of an insulating material.

In the preferred embodiment depicted, the forward layer includes two adhesive sub-layers 438, one strip of tape 440 and one buffer sub-layer 444. The adhesive sub-layers 438 are preferably formed of a hot melt adhesive although not necessarily required. The adhesive may be provided as a web or otherwise and may be continuous or non continuous (e.g., may be applied in drops, dabs or the like). The adhesive sub-layers may include polyamides, polyesters, elastomers, urethanes, olefin polymers or a combination thereof. Moreover, the adhesives may be formulated as desired for particular processing parameters or conditions. Preferably, the adhesive sub-layers are substantially free of anti-blocking solutions, blowing additives, process contaminants or the like which might interfere with adhesive performance. As an example, one suitable hot melt adhesive is commercially available as a non-woven web under the tradename SPUNFAB® from Spunfab, Ltd. 175 Muffin Lane, Cuyahoga Falls, OH 44223.

The buffer sub-layer 444 in the embodiment depicted is a layer of gauze which is capable of protecting the heater sub-layer 432 although various alternative protective materials may be used such as cloth, fleece or the like. Optionally the buffer sub-layer 444 may include adhesive material for laminating it to other sub-layers. The tape 440, when used, is preferably tacky on two sides.

It is also contemplated that the seat component 410 may include a second open space (not shown) provided between the barrier sub-layer 434 and the trim layer 414, although not required. Thus, it is contemplated that the forward layer 420 may also include a spacer layer (not shown), which may be located between the buffer sub-layer 444 and an occupant of the seat. The air-permeable layer, which may be any one of a variety of air-permeable materials (such as reticulated foam, for example) may be able to help distribute air under the occupant. It is also contemplated that such a spacer layer may be formed of any of the other materials described in relation to the other spacer layer 424. In such an embodiment, the heater sub-layer 432, when provided, may be above or below the second open space.

Generally, it is contemplated that the various layers and sub-layers described above may be combined in a variety of sequences and according to a variety of protocols and technique. Thus, the order in which the various layers and sub-layers are combined and the techniques of combining should not in any way limit the present invention unless such order or techniques is specifically claimed. It is also contemplated that there may be greater or fewer layers and that each layer may include greater or fewer sub-layers. Moreover, it is contemplated that the layers may be secured between the cushion and trim layer using a variety of techniques.

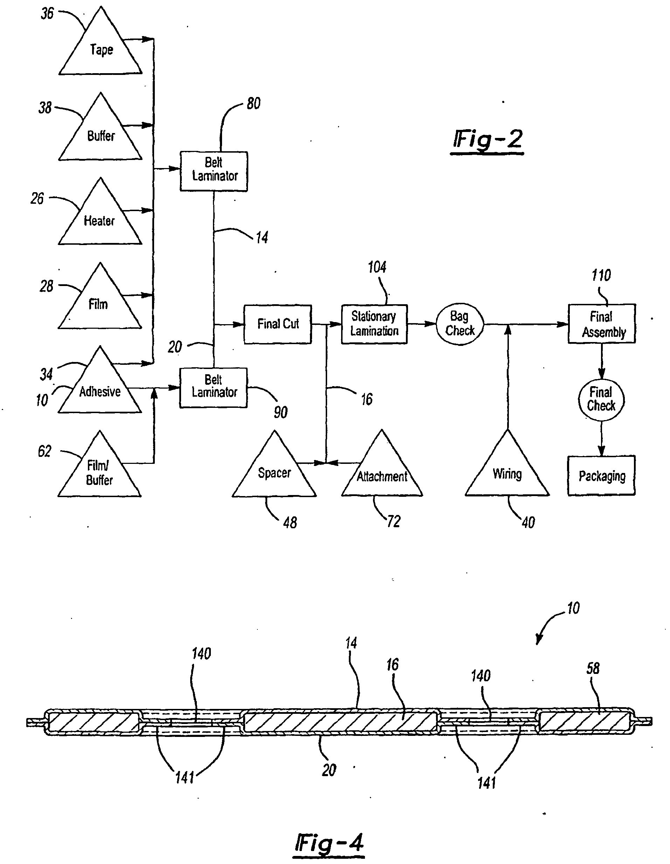

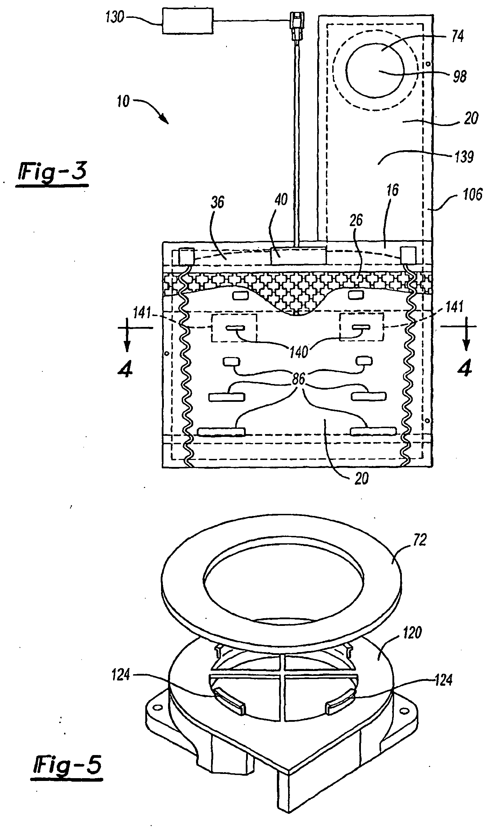

The layers and sub-layers discussed, may be provided by a bag-type or a peripheral edge sealed insert such as that shown in Figs. 3 and 4. An example of such an insert is described in U.S. Patent Application Serial No. 10/434,890, filed May 9, 2003. Alternatively, however, the layers may be provided in a non-sealed condition or as an open edge insert as depicted in Figs. 1A and 1B such that there is no added peripheral seal about the spacer layer 424.

Generally, the present invention provides for fluid communication between an air mover and the open space 416. A tubular structure is provided for facilitating fluid communication between the air mover and the open space 416.

Exemplary air movers include blowers. Air movers of the present invention may be configured for moving heated air, cooled air, ambient air or a combination thereof. As an example, an ambient air mover might be a blower that pushes or pulls air from inside the vehicle cabin through the open space of the comfort system. A heated or cooled air mover might be, for example, a blower coupled with a heating and/or cooling unit (e.g., a thermoelectric heater, cooler or both) wherein the unit heats or cools air from the cabin of the vehicle prior to pushing the air through the open space of the system to the trim surface of the seat. In one embodiment, the air mover may be coupled with a heating and/or cooling unit in a single integrated component. For example a thermoelectric element may comprise on or more parts of a blower or fan, (e.g. as part of the blades). For example, as seen in U.S. Patent Nos. 6,119,463 ; 6,223,539 ; and 6,606,866 .

The air mover may be located at least partially between the seat cushion component and the backrest component for providing fluid communication between the open space and the air mover, the interior of the vehicle cabin or both.

More than one tubular structure may be utilized. When multiple tubular structure are utilized, one or more air or other fluid movers may be utilized and the tubular structures may be the same or different in the manner in which they extend to the air or other fluid mover. Moreover, it is contemplated that the tubular structure may be shaped as desired to assist it in extending to a desired location behind the seat cushion. For example, the extension may be arced, angled, contoured, straight or otherwise configured as it extends away from the rest of the insert.

The present invention also employs an insert suitable for placement within an automotive vehicle seat to provide heating, ventilation or a combination thereof to an occupant in the seat. The insert will typically include multiple (e.g., three) layers and each of the layers may include one or more sub-layers. The insert includes an extension that extends to a backside of a seating component (e.g., a backrest or seat support component) of the seat. The extension extends through a cushion of the seat to a backside of the cushion. The extension connects the insert to a fan for providing ventilation. Advantageously, the extension can be shaped to allow the fan to be attached to various parts such as a lumbar guide wires of a vehicle seat. One exemplary insert that may be employed in the present invention is disclosed in U.S. Patent Application Serial No. 10/434,890, filed May 9, 2003.

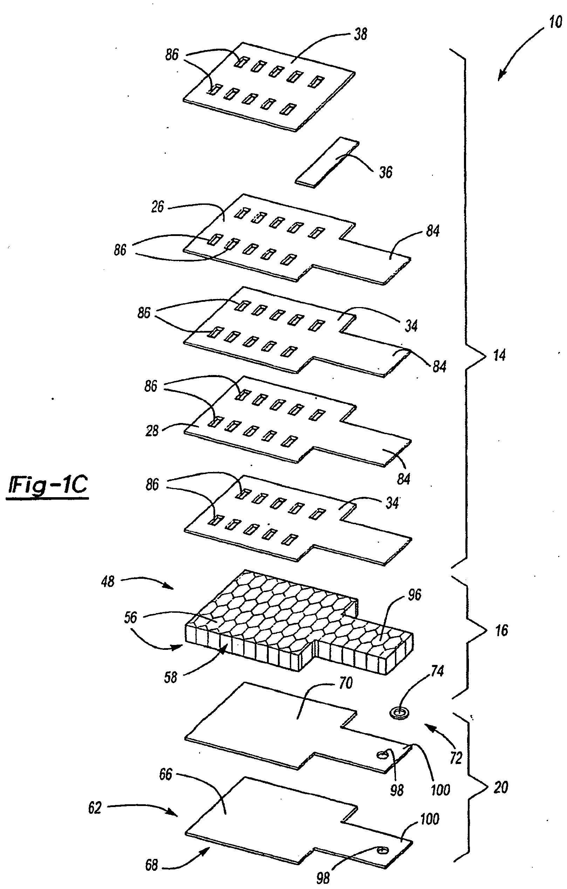

Referring to Figs. 1C and 3-5, there is illustrated an exemplary insert 10 suitable for placement within a seat of an automotive vehicle. The insert 10 preferably includes a plurality of layers that may be separate but are preferably attached to each other to form the insert. In the embodiment shown, the insert 10 includes a first or forward layer 14 (e.g., the layer of the insert configured to be closest an occupant of the seat), a second or middle layer 16 and a third or rearward layer 20 (e.g., the layer of the insert configured to be furthest from the occupant of the seat).

It is preferred that one of the layers 14, 16, 20 includes a heater. In the embodiment depicted, the forward layer 14 includes a heater sub-layer 26, which is preferably laminated to a gas barrier sub-layer 28 (e.g., a film, a textile or otherwise) although such film is not necessarily required. Various different types of heaters are suitable for incorporation into a car seat and it is contemplated that any of such heaters may be incorporated into the insert 10 of the present invention. Such heaters typically incorporate flexible electrical heating elements that are preferably thin, flat, non-obtrusive or a combination thereof. As examples, a lay-wire heater, a carbon fiber heater, a positive thermal coefficient (PTC) heater, a thermoelectric heater or the like, which are typically supported with a backing (e.g., a cloth or fabric type backing) may be used within the insert. In a preferred embodiment, the heater sub-layer 26 is a carbon fiber type heater with a backing (e.g., a nonwoven layer). One exemplary preferred heater is sold under the tradename CARBOTEX^{®} and commercially available from W.E.T Automotive Systems, Inc. in Germany and/or FTG Fraser-Technik GmbH, Schleizer Strasse 56-58, D-95028 Hot/Saale, Germany. An example of such a heater is disclosed in U.S. Patent 6,064,037, issued May 16, 2000.

The barrier sub-layer 28 is typically formed of a plastic or polymeric material that softens or melts upon exposure to heat to assist the sub-layer 28 to adhere to one or more other layers or sub-layers. Alternatively, the barrier sub-layer 28 may be formed of fabrics, woven materials (e.g, goretex or microfibers), nylon, closed pore foam or other materials. Preferably, the barrier sub-layer 28 is substantially impermeable to fluids and particularly air such that the sub-layer 28 can assist in forming an air barrier as will be described further herein. Dimensionally, for a film barrier sub-layer, it is preferable for the film thickness to be about 0.1 mm to about 2.0 mm thick and more preferably about 0.7 mm to about 1.0 mm thick. Of course, it is contemplated that the film sub-layer 28 may have a variable thickness and may be outside of the aforementioned ranges.

The first layer 14 also includes one or more buffer sub-layers, one or more adhesives or adhesive sub-layers, one or more tape sub-layers, one or more porous foam layers or a combination thereof. Adhesive may be supplied in layers, drops or in a variety of other configurations. Preferably, the buffer layer is at least partially formed of an insulating material.

In the preferred embodiment depicted, the first layer 14 includes two adhesive sub-layers 34, one strip of tape 36 and one buffer sub-layer 38. The adhesive sub-layers 34 are preferably formed of a hot melt adhesive although not necessarily required.

According to an alternative embodiment, it is contemplated that the first layer 14 may also include an air-permeable layer (not shown) between the buffer sub-layer 38 and an occupant of the seat. The air-permeable layer, which may be any one of a variety of air-permeable materials (such as reticulated foam, for example) may be able to help distribute air under the occupant.

One of the layers 14, 16, 20, preferably the middle layer 16, includes a spacer sub-layer 48 formed of a spacer material. In the preferred embodiment depicted, the middle layer 16 includes only the spacer sub-layer 48, however, it is contemplated that additional sub-layers (e.g., adhesive sub-layers) or other materials (e.g., adhesives) may be incorporated into the middle layer 16. The particular sub-layer 48 shown is formed of polymeric (e.g., polyester) strand material that is interwoven to provide opposing honeycomb structures 56 (e.g., fabric panels), which are interconnected by several additional polymeric strand materials to provide open space 58 between the structures 56 while still providing cushion and support. As an example, one preferred material is sold under the tradename 3MESH^{®} and is commercially available from Müller Textil GmbH, Germany or Müller Textiles, Inc., Rhode Island, USA.

In another of the layers 14, 16, 20 of the insert 10, preferably the rearward layer 20, there is included an outer protective or buffer sub-layer and another barrier sub-layer. In the embodiment shown, one integrated sub-layer 62 provides the both the barrier sub-layer 66 and the outer protective sub-layer 68 although they may be provided separately. The barrier sub-layer 66 for the rearward layer 20 may be the same or different than the barrier sub-layer 28 of the forward layer 14.

Preferably, the protective sub-layer 68 is formed of a fleece material, however, various other materials may be used such as gauze, cloth, fabric or the like. It is also preferable for the rearward layer 20 to include an adhesive or adhesive sub-layer 70 similar to or the same as those discussed in relation to the forward layer 14. According to a preferred embodiment, the adhesive sub-layer 70 is provided integrally with the integrated sub-layer 62.

In a highly preferred embodiment, an attachment component 72 is included in one of the layers 14, 16, 20. The attachment component 72 shown in Fig. 1C is a frame member that preferably defines an opening or through-hole 74. It is contemplated that the frame member may be in a variety of configurations (e.g., annular, rectangular, square, geometric or otherwise) and may be formed of a variety of preferably rigid or semi-rigid materials (metal, plastic or the like).

Notably, several of the materials of the various layers and sub-layers of the insert 10 may be environmentally friendly. For example, and without limitation, the materials of the spacer sub-layer 48, the buffer and protective sub-layers 38, 68 and the barrier sub-layers 28, 66 may be recyclable.

### Assembly

Generally, for forming a vehicle seat insert according to the present invention, it is contemplated that the various layers and sub-layers of the insert as described above may be combined in a variety of sequences and according to a variety of protocols and technique as long as the insert is or becomes sealed about its periphery. Thus, the order in which the various layers and sub-layers are combined and the techniques of combining should not in any way limit the present invention unless such order or techniques is specifically claimed. Moreover, it is also contemplated that there may be greater or fewer layers and that each layer may include greater or fewer sub-layers.

According to a preferred method, the sub-layers of the front or first layer and the third or rearward layer are each laminated separately followed by laminating the front layer to the rearward layer with the middle layer in between. Referring to Figs. 1C and 2, the first layer 14 is formed according to a preferred method by feeding the various sub-layers 38, 36, 34, 26, 28 to a laminator 80 (e.g., a belt and roller laminator).

The sub-layers 36, 38, 34, 26, 28 are preferably fed to the laminator 80 from rolls or otherwise and are cut to shape to form the first layer 14 after lamination. The first layer 14 may be cut to nearly any desired shape or configuration. In the illustrated embodiment, the first layer 14 is cut to be generally rectangular and to include an extension 84 and a plurality of through-holes 86. In Fig. 1, the through-holes 86 are arranged in a generally rectangular configuration and are each substantially the same size. In Fig. 3, however, the through-holes 86 are shown in a preferred configuration as progressively becoming larger from one side of the insert 10 to another.

Referring to Fig. 3, the through-holes 86 preferably increase in size as the distance of the holes from the fan increases. This increase in size can provide a more uniform flow of air throughout the insert 10. It is believed that the increase in the total cross-sectional area of through-holes 86 as the distance from the fan increases allows air to enter or exit the openings at a more uniform rate than if the cross-sectional areas of through-holes at different distances from the fan were equal.

The rearward layer 20, like the front layer 14, may be formed by attaching it sub-layers 62, 70 in a lamination process. Referring again to Figs. 1C and 2, the barrier sub-layer 66, the protective sub-layer 68 and the adhesive sub-layer 70 are fed to a laminator 90 (e.g., a belt laminator) such that the barrier sub-layer 66. is between and attached to the adhesive sub-layer 70 and the protective sub-layer 68. Thereafter, the rearward layer 20 is cut to have a shape substantially corresponding to the first layer 14. Of course, it is contemplated that the rearward layer may be cut into a variety of other configurations as well. Preferably, the rearward layer 20 includes a through-hole 98 as shown in Fig. 3 through an extension 100 of the rearward layer 20 that corresponds to the extension 84 of the first layer 14. It is contemplated, however, that the through-hole 98 may also be formed in the forward layer 14 if desired.

Once the middle layer 16 has been appropriately cut or otherwise shaped to the proper configuration, which preferably corresponds to the forward and rearward layers 14, 20, each of the layers 14, 16, 20 are laminated together to attach the layers 14, 16, 20 to each other. As shown, the middle layer 16 may be cut to include an extension 96 corresponding to the extensions 84, 100.

In the preferred embodiment, the layers 14, 16, 20 are laminated in a stationary lamination device 104 at elevated temperatures such that the adhesive sublayer 70 of the rearward layer 20 and the outermost adhesive sub-layer 34 of the forward layer 14 both adhere and attach the forward layer 14 and the rearward layer 20 to the middle layer 16 (e.g., the honeycomb structure). At the same time, the barrier sub-layer 28 of the front layer 14 and the barrier sub-layer 66 of the rearward layer 20 are adhered to one another about an outer peripheral strip 106 of the insert 10. For desirably locating the strip 106 (i.e., closer to the rearward layer, the forward layer or somewhere therebetween), it is contemplated that the forward or rearward layers may be cut slightly larger or smaller than each other or they may be the same size.

It is also preferred that the attachment component 72 be sandwiched and attached between at least portion of the rearward layer 20 and the middle layer 16 although the attachment component may be otherwise attached (e.g., retrofit, fastened, or the like). Advantageously, the adhesive sub-layers 34, 70 and the outer laminated peripheral strip 106 separately and together assist in forming the insert 10 as a tightly integrated unit wherein the layers 14, 16, 20 are substantially immobile relative to each other.

While pre-cutting the layers 14, 16, 20 followed by laminating the peripheral edges of at least two of the layers 14, 20 have been discussed, it is contemplated that cutting of the layers 14, 16, 20 and laminating of the layers may be integrated into a single processing step. For example, it is contemplated that supplies (e.g., rolls) of each of the layers 14, 16, 20 may be provided to a machine that laminates outer edges of each of the layers 14, 16, 20 together for forming the peripheral strip 106 as the supplies continuously or intermittently provide the layer 14, 16, 20 to the machine. Thus, inserts 10 may be formed by cutting the inserts 10 with the peripheral strip 106 from the laminated layers 14, 16, 20 and such cutting may be performed by the laminating machine or by another cutting machine or device. In such an embodiment, it is contemplated that the through-holes in the forward layer 14 and the through-hole in the rearward layer may be formed prior to, during or after lamination forming the outer peripheral strip 106.

It is also contemplated that additional cutting or laminating steps may also be employed. For example, it is contemplated that the layers, the sub-layers or both may be partially cut or shaped prior to stationary or other lamination and further cut or shaped after such lamination.

During final assembly 110, the wire harness 40 is preferably inserted within the pocket formed by the tape 36 or otherwise attached to the insert 10. Also, a fan, the housing 120 of which is shown in Fig. 5, is preferably attached to the attachment component 72 of the insert 10. In the embodiment shown, the housing 120 include flanges 124 suitable for snap-fitting the housing 120 to the attachment component 72. In this manner, the fan can be attached to the rest of the insert 10 and can be placed in fluid communication with the through-holes 86 of the first layer 14, the open space 58 of the middle layer 16 and the through-hole 98 of the rearward layer 20. Advantageously, the attachment component 72 and flanges 124 provide a unique and efficient method of attaching the fan to the insert 10. It is contemplated however, that various other methods of attachment (e.g., fasteners, sewing, mating threaded attachments, quick connects or the like) may be used to attach the fan to the insert 10. It is also contemplated that the attachment component 72 and the housing 120 and flanges 124 of the fan may be varied within the scope of the present invention.

For assembly of the insert 10 to a vehicle seat (not shown), the insert 10 is preferably connected (e.g., sewn, adhered or otherwise attached) to a portion of the seat such as the cover (e.g., a perforated leather cover) or to a cushion (e.g., foam) of the seat. In one preferred embodiment, a seat cover may be configured to include a pocket for receiving the insert 10. Alternatively, it is contemplated that hook and loop fasteners may be utilized to attach the insert 10 to portions (e.g., the cover or foam) of the seat. For example, a strip of hook and loop fastener may be attached (e.g., adhered) to the insert and another strip of hook and loop fastener may be attached (e.g., adhered) to the foam cushion within a trench. Thus, the strips can be fastened to each other thereby attaching the insert to the cushion.

The insert 10 is preferably positioned in the seat such that the first layer 14 is closer to the outer seat cover relative to the rearward layer 20 although not necessarily required. It is also preferable for an extension 139 formed by the extensions 84, 96, 100 of the layers 14, 20 to extend behind, in front of or through the cushion of the seat such that the fan may be attached to a portion of the frame of the vehicle seat. Of course, attachment of the insert to the fan and attachment of the fan to the seat or other portion of the vehicle may be accomplished in any order.

The extension 139 is a tubular structure for providing fluid communication between the open space of the spacer layer 48 and the fan. Additionally, the wire harness 40, the heater sub-layer 26, the fan or a combination thereof are preferably connected in signaling communication with a control unit 130 and/or each other. The control unit 130 may be separate from or integrated into the vehicle.

The air movers are shown as being configured for connecting to the extension of the insert. It is also contemplated that an air mover may be otherwise located relative to the insert. For example, a fan might be attached to a main or body portion of the insert.

In one embodiment referring to Figs. 3, 4 and 6, the insert 10 is formed with one or more (e.g., three) through-holes 140 that extend through the layers, sub-layers or both of the insert 10 such that the through-holes 140 extend entirely or substantially entirely through the insert 10. Preferably, the insert 10 (e.g., the barrier layers 28, 66) have a seal 141 about the through-holes 140 for substantially preventing direct fluid communication between the through-holes 140 and the open space 58 within the insert 10. In the embodiment depicted, the barrier sub-layers 28, 66 are attached to each other during the lamination process to form a substantially air-tight seal 141 about the through-holes 140.

Advantageously, the through-holes 140 can assist in the assembly of the insert 10 and/or a seat cover 142 to a seat 144 of an automotive vehicle. As shown, for each through-hole 140, a portion 148 (e.g., a cushion layer, a felt layer, a leather layer, combinations thereof or the like) of the seat cover 142 is extended through the through-hole 140 and is attached to foam 154 of the seat 144. In the embodiment depicted, the portion 148 is attached to the foam 154 by wrapping or otherwise attaching the portion 148 about a member 162 (e.g., a bar or wire) that is attached to (e.g., at least partially imbedded within) the foam 154. Additionally, one or more loops 166 (e.g., metal loops) are integrated with the portion 148 and are looped about the member 162 for assisting in attaching the portion 148 to the member 162.

It shall be appreciated that, in embodiments alternative to the one depicted, a variety of materials or members such as wire, thread, stitches, fasteners, foam or the like may extend through the through-holes 140 in the insert 10 for assisting in the attachment of the seat cover 142, the insert 10 or both to the other components of the seat 144. Moreover the materials or members may be connected to the seat cover, the foam, the seat frame, other portions of the seat or vehicle or the like depending on the desired configuration. It is also contemplated that other attachment methods such as the use of alternative fastening devices may be employed in addition to or alternative to the through-holes 140. For example, hook and loop fasteners, sewing, adhesives or other fastening devices or mechanisms may be employed to locate the insert 10 relative to the seat cushion, the seat cover 142 or both.

### Operation

In operation, the insert can preferably provide heating, ventilation or a combination thereof to an occupant of a seat having the insert. In one embodiment (Figs. 1A and 1B), heating is provided by inducing electrical current (e.g., from the automotive vehicle battery) to travel through the heater sub-layer such that the heater sub-layer provides heat to the trim layer, an occupant of the seat or both. Alternatively, heating may be provided by warming or heating air (e.g., with a thermoelectric air mover) and moving the air via the air mover through one of the tubular structures, the open space, the openings in the forward layer, the opening in the tubular structures and ultimately to the trim layer, the occupant or both.

If ventilation is desired, the air mover can be operated to pull air or push air through the trim layer, the openings in the forward layer, the open space, the openings of the tubular structures or a combination thereof. Such air preferably flows at least partially past the occupant of the seat and before of after flowing through the seat cover (e.g., a perforated leather seat cover or cloth seat cover) thereby providing ventilation to the occupant and providing convective heat transfer from the occupant to the flowing air. If cooling is desired, the air pushed toward the trim layer, the occupant or both may be cooled by cooling air (e.g., with a thermoelectric air mover) and moving the air through the tubular structures, the open space 416 or both and ultimately to the trim layer, the occupant or both. It should be understood that cooling, ventilating, heating or a combination thereof may be controlled by the control unit.

In another embodiment (Figs. 1B and 1C), if heat is desired, electric current can be induced to travel through the heater sub-layer 26 by the control unit 130 or otherwise such that the heater sub-layer 26 can provide heat to the occupant.

Alternatively, if ventilation is desired, the fan can be operated via the control unit 130 or otherwise to pull air through the through-holes 86 in the first layer 14 of the insert 10, through the open space 58 of the middle layer 48 of the insert 10 and through the through-hole 98 of the rearward layer 20. Such air preferably flows at least partially past the occupant of the seat and through the seat cover (e.g., a perforated leather seat cover or cloth seat cover) thereby providing ventilation to the occupant and providing convective heat transfer from the occupant to the flowing air.

In both embodiments having a heater, it may be preferable for only the heater or the ventilation or cooling system to be running at one time, however, it is contemplated that both may be operated simultaneously. Moreover, it is contemplated that both the heater and the ventilation or cooling system may be operated at various levels (e.g., 2 or more levels of output) such as by having an air mover that can operate at different levels or by having various levels of electricity flowing through or throughout the heater or heater sub-layer.

It is also contemplated that one or more temperature sensors (e.g., a thermostat, a thermistor or the like) may be included adjacent the heater sub-layer, the trim layer or the like. Preferably, any temperature sensors are near a seating surface of the seat closely related to (e.g., at or near) a temperature being experienced by an individual in the seat. Such temperature sensors may be in signaling communication with the control unit such that the control unit can control the air mover, the heater sub-layer or both for attaining or maintaining a desired temperature at areas adjacent the individual and/or the temperature sensor. Moreover, the control unit may be programmed with instructions for commanding the air mover, the heater layer or both to change output levels (e.g., turn on or turn off) if the temperature sensor senses a temperature above or below one or more threshold levels. An example of such programming is described in a copending patent application titled "AUTOMOTIVE VEHICLE SEATING COMFORT SYSTEM", serial number 60/428,003, filed Nov. 21, 2002.

Advantageously, the plastic film sub-layers 28, 66 respectively of the first and third layers 14, 20 provide a substantially gas-tight seal about the middle layer 16 (e.g., the spacer sub-layer 48). In this manner, gas flow relative to the open space 58 of the spacer sub-layer 48 is substantially restricted to flowing through the through-holes 86, 98 of the first and third layers 14, 20.

It is contemplated that the extension may be shaped as desired to assist the extension in extending to a desired location behind the seat cushion. For example, the extension may be arced, angled, contoured, straight or otherwise configured as it extends away from the rest of the insert.

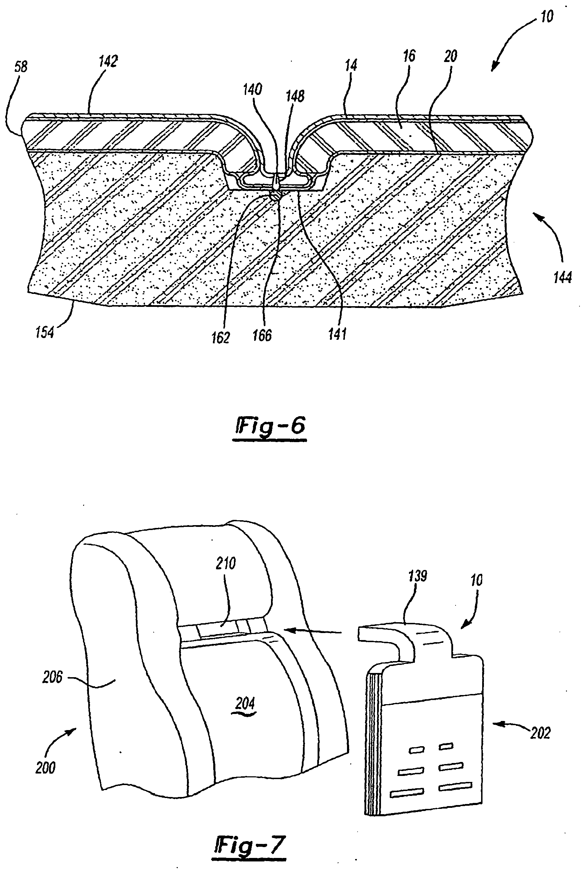

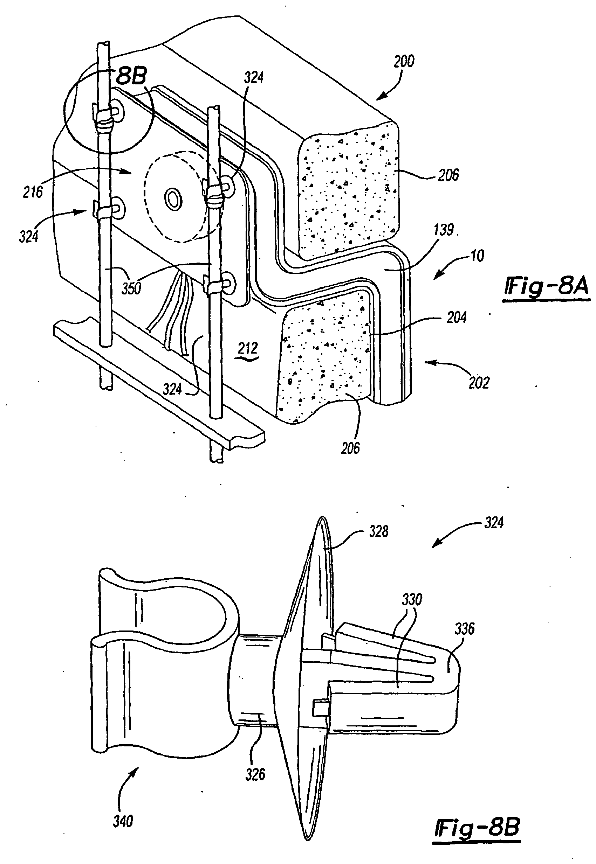

Referring to Figs. 7 and 8A, there is illustrated the insert 10 of the present invention assembled to a seat backrest component 200. In the particular embodiment, a body portion 202 of the insert 10 overlays a forward surface 204 of a backrest cushion 206 of the backrest component 200. Preferably, the body portion 202 of the insert 10 is attached to the cushion 206 of the backrest component 200, although it may alternatively be attached to a cover layer or other portion of a seat. Of course, the insert 10 may be attached to the cushion 206 or cover layer using any of the attachments disclosed herein.

As shown, the backrest cushion 206 has an opening 210 (e.g., a slot or through-hole) extending generally through the cushion 206 of the backrest component 200. In particular, the opening 210 extends through the forward surface 204 and a rearward surface 212 of the cushion 206 at a central area of the cushion 206. Advantageously, the opening 210 is sized to receive the extension 139 of the insert 10 and the extension 139 extends into and through the opening 210 and behind the cushion 206 to oppose at least a portion of the rearward surface 212 of the cushion 206. In the embodiment shown, the extension 139 extends to an air mover 216 (e.g., a blower or other fan), which is also located behind the cushion 206.

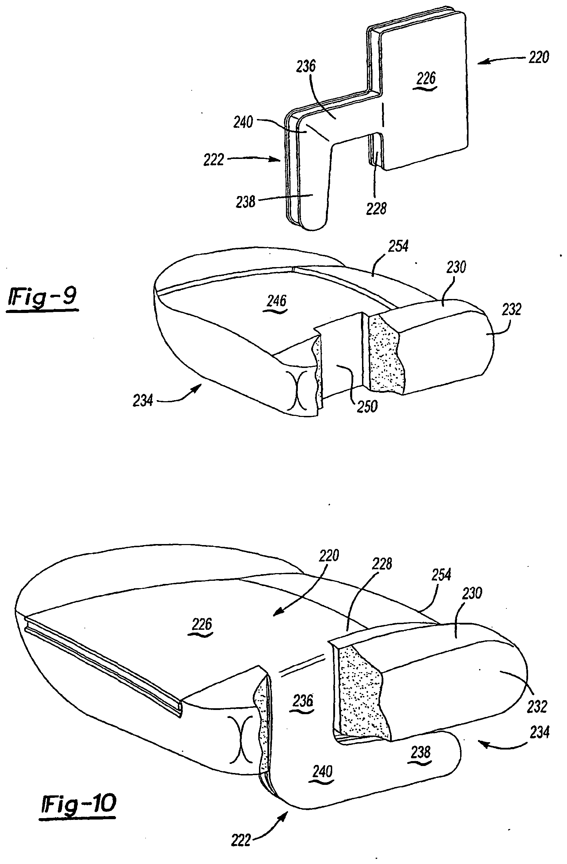

Referring to Figs. 9-11B, there is illustrated an alternative insert 220 according to the present invention. The insert 220 is configured in a manner similar to any of the inserts described herein, however, the insert includes an extension 222 that is contoured (e.g., arced or angle) or non-linear as it extends away from a body portion 226 of the insert 220 and the extension 222 extends from a different edge of the body portion 226 of the insert 220 than shown in previous embodiments. In particular, the extension 222 extends from an edge 228 that is configured to be coextensive with or extending substantially parallel to a side edge 230 of a seat cushion 232 or seat cushion component 234 as shown. Moreover, the extension 222 extends outward from the body portion 226 of the insert 220 from a proximate portion 236 to a distal portion 238 with a contoured (e.g., arced, angled or non-linear) portion 240 therebetween. Preferably, the contoured portion 240 arcs to allow at least the distal portion 238 of the extension 222 to substantially coextend or become substantially parallel with the edge 228.

As shown, the body portion 226 of the insert 220 overlays a forward surface 246 of the seat cushion 232 of the seat cushion component 234. Preferably, the body portion 226 of the insert 220 is attached to the cushion 232 of the seat cushion component 234, although it may alternatively be attached to a cover layer or other portion of a seat. Of course, the insert 220 may be attached to the cushion 232 or cover layer using any of the attachments disclosed herein.

As shown in cut-away, the seat cushion 232 has an opening 250 (e.g., a slotted through-hole) extending generally through the cushion 232 of the seat cushion component 234. In particular, the opening 250 extends through the forward surface 246 and a rearward surface 254 of the cushion 232 at a side area of the cushion 232. Advantageously, the opening 250 is sized to receive the extension 222 of the insert 220 and the extension 222 extends into and through the opening 250 and behind the cushion 232 to oppose at least a portion of the rearward surface 250 of the cushion 232.

In the embodiment shown, the extension 222 extends to an air mover (e.g., a blower or other fan), which is also located behind the cushion 232. As an added advantage, the contoured portion 240 allows the extension 222 to extend toward a forward edge 254 of the seat cushion 232 and/or seat cushion component 234. It should be understood, however, that such a contoured portion 240 may be configured to allow the extension 222 to extend toward any desired location.

It should be understood that in any of the embodiments disclosed herein, steps used to assemble the insert to a cushion component may be carried out in any desired order. For example, the insert may be attached to the cushion component followed by extending the extension through the cushion opening. Alternatively, the extension may be extended through the cushion first.

Preferably, the air mover maintains a substantially identical location with respect to a seat or backrest cushion to which the insert is applied particularly during adjustment of the cushion position or seat. Of course, it is contemplated that the location of the air mover may change relative to the seat or backrest cushion as well.

It is also contemplated that the air mover may be attached with a variety of fastening mechanisms. For example, the air mover may be attached to the various components with one or more mechanical fasteners such as clips, rivets, screws, bolts, interference fit fasteners, snap fit fasteners, integral fasteners, non-integral fasteners, combinations thereof or the like. Other fasteners which may be employed include adhesives, tapes, magnets, combinations thereof or the like.

Depending on the desired configuration, the one or more fasteners may be integrally formed with the air mover (e.g., the housing or other components of a blower) or the one or more fasteners may be separately formed from the air mover and attached thereto. Alternatively, a mounting structure may be attached to the air mover and the one or more fasteners may be integrally formed with the mounting structure or the one or more fasteners may be separately formed from the mounting structure and attached thereto. When used, the mounting structure may be attached to the air mover using any of the fasteners or fastening methods disclosed herein with respect to the air mover and the seat. It is also contemplated that the mounting structure may be integrally formed with one or more of the seat components discussed herein.

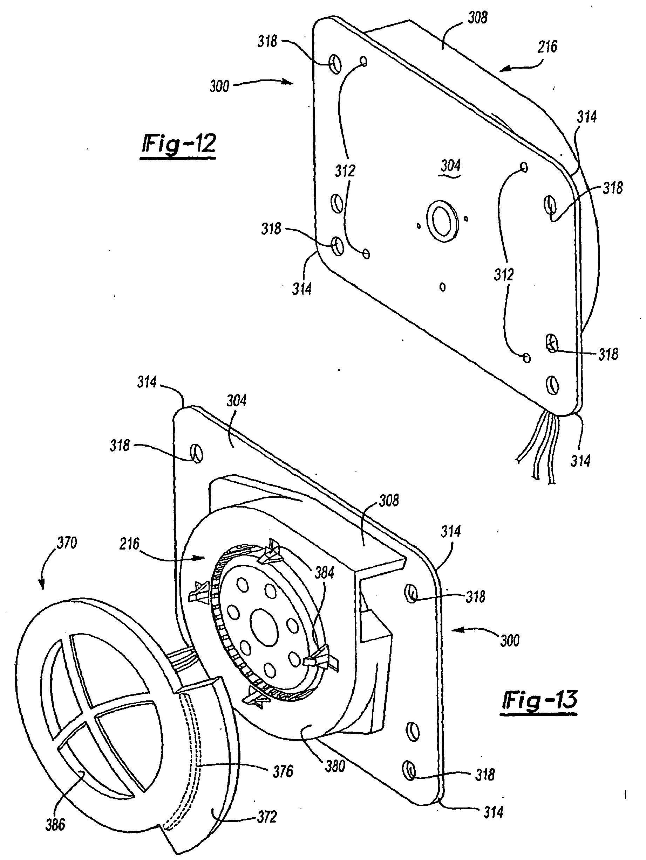

Referring to Figs. 12 and 13, there is illustrated one exemplary fan assembly 300 according to the present invention. The assembly 300 includes the fan 216 attached to a mounting structure 304. In the particular embodiment shown, the fan 216 includes a housing 308 (e.g., a plastic housing) that is attached to the mounting structure 304 with a plurality of fasteners 312 (e.g, screws). The mounting structure 304 is shown as a substantially rectangular metal plate with rounded off corners 314 and a plurality of openings 318 (e.g., through-holes) extending through the plate, one opening 318, adjacent each corner 314. Of course, it is contemplated that a variety of structures other than plates may be employed as the mounting structure and a variety of materials (e.g., plastics, fabrics or the like) may be employed for forming the structure in a variety of alternative configurations.

The assembly 300, as shown in Fig. 8A also includes one or more fasteners 324 attached thereto. As shown in Fig. 8B, each fastener 324 includes a body portion 326 with projections 328, 330 extending therefrom for interference fitting the fastener 324 to the mounting structure 304. In the embodiment shown, each fastener 324 includes a pair of projections 330 extending from an end 336 of the fastener 324 and a conical projection 328. Preferably the pair of projections 330 and the conical projection 328 extend at least partially toward each other, although not required.

Each fastener 324 also includes a fastening mechanism 340 for attaching the fastener 324, the fan assembly 300 or both to one or more components of the seat or other portion of the automotive vehicle. Preferably, the fastening mechanism 340 can be attached by interference fit, adhesion, magnetism or otherwise. In the particular embodiment depicted, the fastening mechanism 340 is a C-shaped clip configured for forming an interference fit. It is generally contemplated that the fastening mechanism may be fitted with a locking mechanism (not shown) to enhance the ability of the fastening mechanism 340 in attaching to members.

In Fig. 8A the fan assembly 300 is attached to a pair of members 350 that extend substantially parallel to the back surface 212 of the backrest component 200. As shown, the members 350 extend substantially vertically when the backrest component 200 is in the upright position, although they may extend in a variety of directions depending upon the members 350 employed and the seat configuration. In the particular embodiment illustrated, the members 350 are cylindrical metal wires that form a portion of a lumbar guide or back support adjustment assembly. Preferably, the members 350 are substantially stationary relative to the backrest component 200, although not required.

For attaching the fan assembly 300 to the members 350, the end 336 and projections 330 of the fasteners 324 are extended through the openings 318 of the mounting structure 304 until the mounting structure 304 is interference fit between the pair of projections 330 and the conical projection 328. Also, the fastening mechanisms 340 of each of fasteners 324 are interference fit (e.g., at least partially clipped about) the members 350.

As shown, the mounting structure 304 is between the members 350 and the cushion 206. In an alternative embodiment, however, the mounting structure 304 may be located on a side of the members 350 away from the cushion 206. In such an embodiment, the fasteners 324 would have to be reversed such that the fastening mechanisms 340 extend toward the cushion 206 and the fan 216 would be located at least partially between the members 350. Advantageously, such an embodiment can provide for greater space between the fan 216 and the cushion 206 for allowing air to flow to or from the fan 216 more easily.

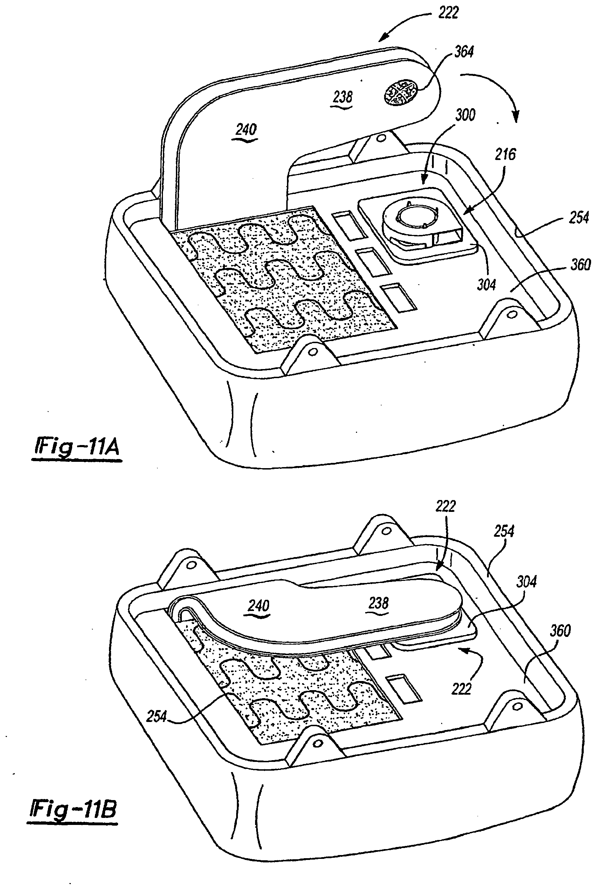

Referring to Figs. 11A-11B, the fan assembly 300 is attached to a support frame 360 for the cushion 232. As depicted, the mounting structure 304 is attached to the support frame 360 and an opening 364 (e.g., a through hole) extending into the insert 220 is placed in fluid communication with the fan 216. It is contemplated, however, that the fan 216 may be directly attached to the support frame 360 and the mounting structure 304 may be removed. Moreover, the support frame 360, particularly when molded of plastic, can be molded to specifically receive the fan 216 and assist in its attachment thereto.

While is contemplated that any of the inserts or extensions may be attached to the fan using the ring 72 of Fig. 5, it is also possible to design a ring, which aids in the assembly of the insert to the fan. As an example, there is a ring 370 illustrated in Fig. 13 having an extension 372 (e.g., a semi-circular extension) extending from the ring 370 and a lip 376 located adjacent an interface of the ring 370 and the extension 372. As shown, the extension 372 extends away from the ring 370 in the same plane as the ring 370 and the lip 376 extends from the extension 372 at least partially perpendicular to the plane of the ring 370 and the extension 372. Thus, the lip 376 is configured for extending outwardly away from any insert into which the ring 370 is installed.

To assemble the ring 370 and the insert when attached to the ring 370 to the fan 216, the lip 376 can be abuttingly engaged with the housing 308 of the fan 216 adjacent an edge 380 of the housing 308. In turn, the ring 370 is aligned with fasteners 384 of the fan 216 such that the ring 370 may be snap-fit to an inner annular edge 386 of the fasteners 384 as described previously with regard to the ring 72 of Fig. 5.

It should be recognized that various alternative attachments other than the rings described may be employed to attach the air movers to the inserts. For example, attachments such as twist locks, spring locks, tabs on a ring, tabs on the air mover housing, combinations thereof or the like may be employed. It should be further recognized that the air mover, the snap ring or both can include protective equipment such as fingerguards (e.g., cross-bars) or the like.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

It will be further appreciated that functions or structures of a plurality of components or steps may be combined into a single component or step, or the functions or structures of one-step or component may be split among plural steps or components. The present invention contemplates all of these combinations. Unless stated otherwise, dimensions and geometries of the various structures depicted herein are not intended to be restrictive of the invention, and other dimensions or geometries are possible. Plural structural components or steps can be provided by a single integrated structure or step. Alternatively, a single integrated structure or step might be divided into separate plural components or steps. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

## Claims

1. A ventilated seat, comprising:
a seat having a seat cushion component (232) and a backrest cushion (206) component, at least one of which is ventilated, each ventilated component having an air permeable trim surface (414) at occupant contact areas of the seat;
an open space (416) located beneath the trim surface of at least one of each ventilated component; and
an air mover assembly (300) in fluid communication with the open space, wherein the air mover assembly is fastened to a pair of lumbar rods (350) of a lumbar adjustment assembly with one or more members that extend substantially vertically when the backrest cushion component is in an upright position and wherein the one or more members are the pair of lumbar rods (350) and
further comprising a tubular structure (139) at least partially providing fluid communication between the air mover assembly and the open space and wherein the ventilated component is defined by an edge sealed insert and the air mover assembly comprises a blower that is fastened to the pair of lumbar rods,
wherein the open space located beneath the trim surface of each ventilated component is provided by a spacer layer, and
wherein the backrest cushion includes an opening extending therethrough for at least assisting in providing fluid communication between the air mover assembly and the open space,
wherein the tubular structure is an extension of the insert, and the tubular structure extends entirely through the opening in the back rest cushion and the extension of the insert being attached to the air mover assembly behind the back rest cushion.

2. The ventilated seat of claim 1, further comprising a snap fit configuration for attachment of the tubular structure with the air mover and wherein the tubular structure is flexible.

3. The ventilated seat of claims 1 to 2 wherein the air mover assembly comprises a thermoelectric unit.

4. The ventilated seat of claims 1 to 3, further comprising a heater layer (432).

5. The ventilated seat of claim 7 wherein the tubular structure includes a proximal portion, a distal portion and an arced portion therebetween

6. A ventilated seat according to any of the preceding claims wherein the air mover assembly includes a mounting structure and a plurality of fasteners attached to the mounting structure wherein at least a portion of the air mover assembly is attached to one or more components behind the seat cushion or the backrest cushion.

7. The ventilated seat according to any of the preceding claims wherein the lumbar adjustment assembly comprises at least a portion of a frame of the seat.

8. The ventilated seat according to any of the preceding claims wherein the one or more members are substantially stationary relative to the backrest cushion component.

9. The ventilated seat according to any of the preceding claims wherein the lumbar adjustment assembly further comprises one or more of plates, flexible members, fasteners, motors or combinations thereof.

10. The ventilated seat according to any of the preceding claims wherein the air mover assembly comprises a blower that is fastened to the one or more plates, flexible members, fasteners, motors or combinations thereof.

11. An automotive seat which is a ventilated seat according to any of the preceding claims.

## Patentansprüche

1. Belüfteter Sitz, der umfasst:
einen Sitz, der über eine Sitzkissenkomponente (232) und eine Rückenkissenkomponente (206) verfügt, von denen mindestens eine belüftet ist, wobei jede belüftete Komponente über eine luftdurchlässige Trimmoberfläche (414) bei Insassenkontaktbereichen des Sitzes verfügt;
einen freien Raum (416) unterhalb der Trimmoberfläche von mindestens einer von jeder belüfteten Komponente; und
eine Luftantriebsanordnung (300) in fluider Kommunikation mit dem freien Raum, **dadurch gekennzeichnet, dass** die Luftantriebsanordnung an ein Paar Lendengitter (350) einer Rückenlehnengestelleinstellanordnung mit einem oder mehreren Teilen befestigt ist, die sich im Wesentlichen vertikal erstrecken, wenn sich die Rückenkissenkomponente in einer aufrechten Position befindet, und wobei der eine oder die mehreren Teile das Paar Lendengitter (350) sind, und
weiterhin eine röhrenförmige Struktur (139) umfasst, die mindestens zum Teil eine fluide Kommunikation zwischen der Luftantriebsanordnung und dem freien Raum zur Verfügung stellt, und wobei die belüftete Komponente durch einen Einsatz mit dichter Kante definiert wird und die Luftantriebsanordnung ein Gebläse, das an dem Paar von Lendengittern befestigt ist, umfasst,
wobei der freie Raum, der unterhalb der Trimmoberfläche einer jeden belüfteten Komponente angeordnet ist, durch eine Abstandsschicht zur Verfügung gestellt wird, und
wobei das Rückenkissen eine Öffnung umfasst, die sich dadurch erstreckt, um mindestens bei einem Bereitstellen einer fluiden Kommunikation zwischen der Luftantriebsanordnung und dem freien Raum zu helfen,
wobei die röhrenförmige Struktur eine Verlängerung des Einsatzes ist und sich die röhrenförmige Struktur vollständig durch die Öffnung des Rückenkissens erstreckt und die Verlängerung des Einsatzes an die Luftantriebsanordnung hinter dem Rückenkissen befestigt ist.

2. Belüfteter Sitz gemäß den Anspruch 1, der weiterhin eine Schnappverbindungskonfiguration zur Befestigung der röhrenförmigen Struktur an den Luftantrieb umfasst und wobei die röhrenförmige Struktur flexibel ist.

3. Belüfteter Sitz gemäß den Ansprüchen 1 bis 2, wobei die Luftantriebsanordnung eine thermoelektrische Einheit umfasst.

4. Belüfteter Sitz gemäß den Ansprüchen 1 bis 3, der weiterhin eine Heizungsschicht (432) umfasst.

5. Belüfteter Sitz gemäß einem der vorangehenden Ansprüche, wobei die röhrenförmige Struktur einen proximalen Teil, einen distalen Teil und einen dazwischen liegenden gewölbten Teil umfasst.

6. Belüfteter Sitz gemäß einem der vorangehenden Ansprüche, wobei die Luftantriebsanordnung eine Befestigungsstruktur und eine Mehrzahl von Befestigungsvorrichtungen umfasst, die an der Befestigungsstruktur befestigt sind, wobei mindestens ein Teil der Luftantriebsanordnung an eine oder mehrere Komponenten hinter dem Sitzkissen oder dem Rückenkissen befestigt ist.

7. Belüfteter Sitz gemäß einem der vorangehenden Ansprüche, wobei die Lendeneinstellanordnung mindestens einen Teil eines Rahmens des Sitzes umfasst.

8. Belüfteter Sitz gemäß einem der vorangehenden Ansprüche, wobei der eine oder die mehreren Teile relativ zu der Rückenkissenkomponente im Wesentlichen stationär sind.

9. Belüfteter Sitz gemäß einem der vorangehenden Ansprüche, wobei die Lendeneinstellanordnung weiterhin eine oder mehrere Platten, flexible Teile, Befestigungsvorrichtungen, Motoren oder Kombinationen davon umfasst.

10. Belüfteter Sitz gemäß einem der vorangehenden Ansprüche, wobei die Luftantriebsanordnung ein Gebläse, das an eine oder mehrere Platten, flexible Teile, Befestigungsvorrichtungen, Motoren oder Kombinationen davon befestigt ist, umfasst.

11. Autositz, der ein belüfteter Sitz gemäß einem der vorangehenden Ansprüche ist.

## Revendications

1. Un siège ventilé comprenant :
un siège ayant un composant coussin de siège (232) et un composant coussin de dossier (206), dont au moins un est ventilé, chaque composant ventilé ayant une surface de garniture perméable à l'air (414) au niveau des zones de contact occupant du siège;
un espace ouvert (416) situé sous la surface de garniture d'au moins un de chaque composant ventilé; et
un ensemble brasseur d'air (300) en communication fluidique avec l'espace ouvert dans quoi l'ensemble brasseur d'air est attaché à une paire de tiges lombaires (350) d'un ensemble d'ajustement lombaire avec un ou plusieurs éléments qui s'étendent substantiellement verticalement lorsque le composant coussin de dossier est dans une position verticale et dans quoi l'un ou plusieurs éléments constituent la paire de tiges lombaires (350) et comprenant encore une structure tubulaire (139) fournissant au moins partiellement une communication fluidique entre l'ensemble brasseur d'air et l'espace ouvert et dans quoi le composant ventilé est défini par une pièce rapportée au bord étanchéifié et l'ensemble brasseur d'air comporte un ventilateur qui est fixée à la paire de tiges lombaires,
dans quoi l'espace ouvert situé sous la surface de garniture de chaque composant ventilé est fourni par une couche entretoise, et
dans quoi le coussin de dossier comporte une ouverture s'étendant à travers ce dernier pour au moins aider à fournir une communication fluidique entre l'ensemble brasseur d'air et l'espace ouvert,
dans quoi la structure tubulaire constitue un prolongement de la pièce rapportée, et la structure tubulaire s'étend entièrement à travers l'ouverture dans le coussin de dossier et le prolongement de la pièce rapportée étant fixé à l'ensemble brasseur d'air derrière le coussin de dossier.

2. Le siège ventilé de la revendication 1, comprenant encore une configuration d'encliquetage pour la fixation de la structure tubulaire avec le brasseur d'air et dans quoi la structure tubulaire est flexible.

3. Le siège ventilé des revendications 1 à 2 dans quoi l'ensemble brasseur d'air comprend une unité thermoélectrique.

4. Le siège ventilé des revendications 1 à 3, comprenant encore une couche chauffante (432).

5. Le siège ventilé selon l'une quelconque des revendications précédentes dans quoi la structure tubulaire comporte une partie proximale, une partie distale et une partie arquée entre ces dernières.

6. Un siège ventilé selon l'une quelconque des revendications précédentes dans quoi l'ensemble brasseur d'air comporte une structure de montage et une pluralité d'attaches fixées à la structure de montage dans quoi au moins une partie de l'ensemble brasseur d'air est fixée à un ou plusieurs composants derrière le coussin de siège ou le coussin de dossier.

7. Le siège ventilé selon l'une quelconque des revendications précédentes dans quoi l'ensemble d'ajustement lombaire comprend au moins une partie d'un cadre du siège.

8. Le siège ventilé selon l'une quelconque des revendications précédentes dans quoi l'un ou plusieurs éléments sont substantiellement stationnaires relativement au composant coussin de dossier.

9. Le siège ventilé selon l'une quelconque des revendications précédentes dans quoi l'ensemble d'ajustement lombaire comprend encore une ou plusieurs plaques, éléments flexibles, attaches, moteurs ou combinaisons de ces derniers.

10. Le siège ventilé selon l'une quelconque des revendications précédentes dans quoi l'ensemble brasseur d'air comprend un ventilateur qui est attaché à l'une ou plusieurs plaques, éléments flexibles, attaches, moteurs ou combinaisons de ces derniers.

11. Un siège d'automobile qui est un siège ventilé selon l'une quelconque des revendications précédentes.
